# EUROPÄISCHE PATENTANMELDUNG

(11) **EP 4 464 430 A1**
(43) Veröffentlichungstag der Anmeldung: **20.11.2024**
(21) Anmeldenummer: 23173597.8
(22) Anmeldetag: 16.05.2023
(51) Int. Cl.: B08B 9/043, B65G 53/52, F16L 101/12, B65G 45/14

(54) **VERFAHREN ZUR REINIGUNG, REINIGUNGSEINRICHTUNG UND PRODUKTIONSANLAGE**

(71) Anmelder: Edelmann, Hans-Joachim, 38667 Bad Harzburg (DE)
(72) Erfinder: Edelmann, Hans-Joachim, 38667 Bad Harzburg (DE)
(74) Vertreter: REHBERG HÜPPE + PARTNER

(57) **Zusammenfassung**

Die Erfindung betrifft ein Verfahren, welches Einsatz findet während des kontinuierlichen Aufbringens eines Zusatzes (7) auf einen durch ein Rohr (4) geförderten Strom von Partikeln (2) und/oder während des Förderns eines Stroms von Partikeln (2) mit darauf aufgebrachtem Zusatz (7) durch das Rohr (4). Erfindungsgemäß wird ein Reinigungswerkzeug (12) entlang einer Innenfläche (15) des Rohrs (4) bewegt. Auf diese Weise können an der Innenfläche (15) des Rohrs (4) abgelagerte Partikel (2) und/oder kann an der Innenfläche (15) des Rohrs (4) abgelagerter Zusatz (7) von der Innenfläche (15) entfernt werden und in den durch das Rohr (4) geförderten Strom zurückgeführt werden. Die Erfindung betrifft auch eine Reinigungseinrichtung (11) sowie eine Produktionsanlage (1).

Die Erfindung findet vorzugsweise Anwendung in Produktionsanlagen für Werkstoffplatten, Halbzeuge oder Baumaterialien, bei denen der Zusatz ein Bindemittel, eine adhäsive Flüssigkeit oder ein Leim und die miteinander verbundenen Partikel Fasern wie Holzfasern, Holzspäne, Glaswolle, Steinwolle oder Drahtwolle sein können.

## Beschreibung

### TECHNISCHES GEBIET DER ERFINDUNG

Für die großindustriellen Produktionsanlagen erfolgt einer Herstellung von Werkstoffplatten, Halbzeugen oder Baumaterialien aus über einen Zusatz (insbesondere eine Flüssigkeit wie ein Bindemittel, eine adhäsive Flüssigkeit oder ein Leim) miteinander verbundenen Partikeln (insbesondere Fasern wie Holzfasern, Holzspäne, Steinwolle, Glaswolle, Drahtwolle oder zellulosehaltige Partikel) in automatisierten Prozessen, bei denen eine taktgebundene oder kontinuierliche Pressung der über den Zusatz verbundenen Partikel zu den Werkstoffplatten, Halbzeugen oder Baumaterialien erfolgt. In den Produktionsanlagen erfolgt ein kontinuierliches Aufbringen des Zusatzes auf einen durch ein Rohr geförderten Strom der Partikel und/oder ein Fördern des Stroms von Partikeln mit darauf aufgebrachtem Zusatz durch das Rohr.

Im Folgenden wird bevorzugt auf ein Anwendungsbeispiel Bezug genommen, bei dem als Holzfasern ausgebildete Partikel mit einem als Bindemittel oder Leim ausgebildeten Zusatz versehen werden, um Holzfaserplatten (Spanplatten, MDF-Platten, HDF-Platten, Dämmplatten) herzustellen, ohne dass die Erfindung auf dieses Anwendungsgebiet eingeschränkt sein soll.

Für die Herstellung von Holzfaserplatten ist das Rohr als so genannte Blasleitung (engl.: "blowline") ausgebildet. In einem Refiner erfolgt ein Kochen und Zermahlen von Holzhackschnitzeln. In dem Refiner werden die Holzhackschnitzel sowohl durch Mahlscheiben als auch mittels Dampf zu Holzfasern aufgespaltet. Die derart erzeugten Holzfasern werden dann von dem Refiner durch ein Wasserdampfdruckgefälle durch das Rohr gefördert und hierbei mit dem Bindemittel benetzt. Hierzu wird das Bindemittel über Düsen in das Rohr eingebracht. Das Rohr fördert die Partikel unter Aufbringung des Zusatzes von dem Refiner zu einem Trockner, der der Reduzierung der Feuchte dient.

Wird das in das Rohr eingebrachte Bindemittel nicht vollständig von den Partikeln aufgenommen, lagert sich überschüssiges Bindemittel an einer Innenfläche des Rohrs ab. Alternativ oder kumulativ möglich ist, dass sich an der Innenfläche des Rohrs mit dem Zusatz benetzte Partikel ablagern. Im Betrieb der Produktionsanlage kann die Temperatur des Rohrs ca. 120 °C bis 140 °C erreichen, während die Holzfasern in dem Rohr eine Temperatur von ca. 70 °C bis 85 °C haben können. Der Strahl des Bindemittels kann an der Innenfläche des Rohrs Ablagerungen bilden, die aus dem Bindemittel und darin angeordneten Holzfasern oder -stäuben bestehen können. Obwohl der Strom der Partikel durch das Rohr mit Geschwindigkeiten im Bereich von ungefähr 30 m/s erfolgen kann, haben die durch das Rohr geförderten Partikel keine hinreichend abrasive Wirkung, um derartige Ablagerungen abzubauen, so dass der freie Strömungsquerschnitt des Rohrs zunehmend verengt werden kann. Hierdurch kann die Produktion beeinträchtigt werden, und es kann ein Stillstand der Produktion erforderlich sein, um eine Reinigung des Rohrs durchzuführen.

Ein weiteres Problem ist, dass u. U. nicht kontinuierlich die gleiche Menge der Partikel durch das Rohr strömt, so dass bei einer temporären Verringerung des Volumenstroms der Partikel der kontinuierlich zugeführte Zusatz nicht vollständig von den Partikeln aufgenommen wird, womit sich eine erhöhte Gefahr oder Neigung ergibt, dass der Zusatz an der Innenfläche des Rohrs Ablagerungen bildet.

In der Praxis ist für eine vorbeugende Instandhaltung das Rohr ca. alle 14 Tage per Hand zu reinigen. Hierbei ist das Reinigungsintervall von dem Durchmesser des Rohrs und den Strömungsbedingungen abhängig. Möglich ist, dass das Rohr für die Reinigung aus der Anlage entnommen werden muss. Die Reinigung der Rohre erfolgt dann üblicherweise von Hand, wobei dies unter Einsatz eines Schabers über "Mannlöcher" erfolgen kann. Insbesondere für den Fall, dass der Zusatz MDI aufweist, kann der manuelle Reinigungsprozess gesundheitsschädlich sein, da MDI die Lunge verklebt. Somit kann erforderlich sein, dass der Werker bei der anuellen Reinigung ein Atemschutzgerät tragen muss.

Bekannt sind auch Ausführungsformen, bei welchen eine redundante Verbindung zwischen dem Refiner und dem Trockner über zwei parallele Rohre vorhanden ist, so dass für die Reinigung eine Umschaltung von einem ersten Rohr auf ein zweites Rohr (und umgekehrt) erfolgen kann.

Die Ausfallzeit der Anlage infolge der erforderlichen Reinigung kann eine gesamte Schicht betragen, was zu einem Umsatzausfall einer Anlage im Bereich von € 150.000 bis € 250.000 führen kann, woraus sich ein jährlicher Umsatzausfall in Höhe von € 3,5 Mio. bis € 6 Mio. ergeben kann.

WO 2017/005456 A1 offenbart ein Beispiel einer Produktionsanlage, in welcher die vorliegende Erfindung einsetzbar ist.

### AUFGABE DER ERFINDUNG

Der vorliegenden Erfindung liegt die Aufgabe zugrunde,
- ein Verfahren zum kontinuierlichen Aufbringen eines Zusatzes auf einen durch ein Rohr geförderten Strom von Partikeln und/oder zum Fördern eines Stroms von Partikeln mit darauf aufgebrachtem Zusatz durch das Rohr,
- eine Reinigungseinrichtung und
- eine Produktionsanlage
hinsichtlich Beeinträchtigungen des Produktionsbetriebs infolge von Ablagerungen von Partikeln und/oder des Zusatzes an einer Innenfläche des Rohrs zu verbessern.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Für eine Lösung der der Erfindung zugrundeliegenden Aufgabe wird ein Verfahren vorgeschlagen, welches während des kontinuierlichen Aufbringens eines Zusatzes, insbesondere eines Bindemittels, auf einen durch ein Rohr geförderten Strom von Partikeln und/oder während eines Förderns eines Stroms von Partikeln mit darauf aufgebrachtem Zusatz durch das Rohr durchgeführt wird. Die Erfindung schlägt vor, dass während des Aufbringens und/oder Förderns ein Reinigungswerkzeug entlang einer Innenfläche des Rohrs bewegt wird. Hierbei kann das Reinigungswerkzeug während der Bewegung entlang der Innenfläche an dem Rohr anliegen oder mit einem Spiel entlang der Innenfläche des Rohrs bewegt werden. Durch die Bewegung des Reinigungswerkzeugs entlang der Innenfläche können mittels des Reinigungswerkzeugs an der Innenfläche des Rohrs abgelagerte Partikel, der Zusatz oder ein Gemisch aus den Partikeln mit dem Zusatz von der Innenfläche entfernt oder abgeschabt werden, und diese können wieder in den durch das Rohr geförderten Strom zurückgeführt werden. Da diese Bewegung des Reinigungswerkzeugs während des kontinuierlichen Aufbringens und/oder Förderns erfolgt, können Reinigungsintervalle des Rohrs verlängert werden oder vollständig entbehrlich gemacht werden, womit Ausfallzeiten und Umsatzausfälle zumindest reduziert werden können.

Das Reinigungswerkzeug kann eine beliebige Form aufweisen, solange dieses im Inneren des Rohrs angeordnet sein kann und hier bewegt werden kann. Für einen Vorschlag der Erfindung ist das Reinigungswerkzeug ein Schaber. Der Schaber kann dabei mit einem oder mehreren Teilumfangsabschnitten oder dem gesamten Umfang und/oder einem oder mehreren Längsabschnitten der Innenfläche des Rohrs in Wechselwirkung treten. Vorzugsweise verfügt der Schaber über eine Schneide mit einer beliebigen Schneidenkontur. Der Schaber oder die Schneide können dabei dazu dienen, an der Innenfläche des Rohrs abgelagerte Partikel, Zusatz oder ein Gemisch aus den Partikeln und dem Zusatz von der Innenfläche zu entfernen.

Für ein Ausführungsbeispiel ist das Reinigungswerkzeug mit einem hülsenförmigen Teilabschnitt ausgestattet, wobei das Reinigungswerkzeug auch als Hülse ausgebildet sein kann. Hierbei ist vorzugsweise der Außendurchmesser des hülsenförmigen Teilabschnitts angepasst an den Durchmesser der Innenfläche des Rohrs, so dass hier ein Kontakt oder eine Wechselwirkung mit einer Übergangs- oder Spielpassung oder einem Spiel gewährleistet ist. Möglich ist auch, dass das Reinigungswerkzeug mit einer Elastizität ausgestattet ist, welche eine Anpressung des Reinigungswerkzeugs mit einer durch die Elastizität und einen Vorspannweg vorgegebenen Anpresskraft an die Innenfläche des Rohrs gewährleistet. Die zumindest teilweise hülsenförmige Ausgestaltung des Reinigungswerkzeugs kann eine gleichzeitige Wechselwirkung des Reinigungswerkzeugs über den gesamten Umfang der Innenfläche des Rohrs gewährleisten. Andererseits bildet der hülsenförmige Teilabschnitt oder die Hülse eine Art Ringstruktur, die die gewünschten Steifigkeitseigenschaften und Festigkeit des Reinigungswerkzeugs gewährleisten kann und u. U. auch eine gute Kopplung mit einem Antrieb ermöglicht.

Für die Art der Bewegung des Reinigungswerkzeugs in dem Rohr gibt es vielfältige Möglichkeiten. So kann das Reinigungswerkzeug entlang einer beliebigen Kurvenbahn bewegt werden, wobei sich dieses nicht ausschließlich parallel zur Innenfläche des Rohrs oder in Umfangsrichtung bewegen kann, sondern bspw. auch temporär radial nach innen bewegt werden kann, um temporär den Abstand zwischen dem Reinigungswerkzeug und der Innenfläche des Rohrs zu verändern.

Für einen Vorschlag der Erfindung wird das Reinigungswerkzeug oszillierend in Längsrichtung des Rohrs bewegt. Die Amplitude der Oszillation des Reinigungswerkzeugs gibt damit den Reinigungsabschnitt des Reinigungswerkzeugs und damit den mit dem Reinigungswerkzeug gereinigten Längsabschnitt des Rohrs vor. Hierbei kann die oszillierende Bewegung permanent oder intermittierend mit Ruhepausen erfolgen. Die Geschwindigkeit der oszillierenden Bewegung des Reinigungswerkzeugs und die Frequenz der Oszillation sind einerseits an den Reinigungsbedarf, also die Schnelligkeit des Aufbaus von Ablagerungen an der Innenfläche des Rohrs, und andererseits an die erforderliche Bewegung und die erforderlichen Kräfte zur Lösung der Ablagerungen von der Innenfläche des Rohrs angepasst.

Alternativ oder kumulativ möglich ist, dass das Reinigungswerkzeug in Umfangsrichtung des Rohrs bewegt wird. Um lediglich ein die Erfindung nicht beschränkendes Beispiel zu nennen, kann das Reinigungswerkzeug in diesem Fall als ein Schaber ausgebildet sein, der sich in einer radialen Längsebene des Rohrs erstreckt und im radial außenliegenden Endbereich die Schneide ausbildet, die entlang der Innenfläche des Rohrs bewegt wird. Möglich ist aber auch, dass der Schaber als Platte ausgebildet ist, die sich in Längsrichtung entlang der Innenfläche des Rohr erstreckt und in Querrichtung eine Sekante des Innenquerschnitts des Rohrs bildet, wobei dann die in Querrichtung außenliegenden Kanten der Platte die Schneiden bilden und mit der Innenfläche zur Beseitigung der Ablagerungen in Wechselwirkung treten. Rotiert ein derartiges Reinigungswerkzeug in Umfangsrichtung des Rohrs, können die Ablagerungen an der Innenfläche des Rohrs sukzessive in Umfangsrichtung beseitigt werden.

Möglich ist, dass für das vorgenannte Beispiel die Schneide des in Umfangsrichtung des Rohrs bewegten Reinigungswerkzeugs parallel zur Längsachse des Rohrs und damit parallel zu einer Innenfläche des Rohrs orientiert ist. Für einen besonderen Vorschlag der Erfindung kann ein in Umfangsrichtung des Rohrs bewegtes Reinigungswerkzeug auch genutzt werden im Bereich eines Reduzierstücks des Rohrs, im Bereich dessen die Innenfläche des Rohrs konusförmig ausgebildet ist. In diesem Fall kann die Erstreckungsrichtung der Schneide des Reinigungswerkzeugs parallel zu der konusförmigen Innenfläche des Reduzierstücks orientiert sein. Für nicht konusförmige Veränderungen des Durchmessers der Innenfläche des Rohrs kann die Schneide des Reinigungswerkzeugs eine andere beliebige, dem Verlauf der Innenfläche des Rohrs folgende Kontur aufweisen.

Ein weiterer Aspekt der Erfindung widmet sich der Ausgestaltung des Antriebs für die Erzeugung der Bewegung des Reinigungswerkzeugs. Möglich ist durchaus, dass der Antrieb des Reinigungswerkzeugs in das Rohr selber integriert ist, sofern der Antrieb mit dem Reinigungswerkzeug den Innenquerschnitt des Rohrs nicht vollständig ausfüllt, sondern ein verbleibender Restquerschnitt zwischen dem Antrieb mit dem Reinigungswerkzeug und der Innenfläche des Rohrs verbleibt, der zumindest einen reduzierten Weiterbetrieb der Produktionsanlage ermöglicht. Vorzugsweise ist aber der Antrieb, über den das Reinigungswerkzeugt bewegt wird, außerhalb des Rohrs angeordnet, wobei der Antrieb beispielsweise in Richtung der Längsachse in dem Reinigungsabschnitt des Reinigungswerkzeugs angeordnet sein kann.

Die Kopplung des Antriebs mit dem Reinigungswerkzeug kann beliebig ausgebildet sein:
Möglich ist beispielsweise, dass der Antrieb als kontinuierlich umlaufender Riemen oder anderweitiges Zugmittel ausgebildet ist, wobei das Zugmittel durch geeignete Umlenkelemente stromaufwärts und stromabwärts des Reinigungsabschnitts des Reinigungswerkzeugs durch eine geeignete abgedichtete Öffnung in den Innenraum des Rohrs eintreten kann bzw. aus dem Innenraum des Rohrs austreten kann. Im Inneren des Rohrs ist dann das Zugmittel an dem Reinigungswerkzeug angelenkt. Die Hin- und Herbewegung des Zugmittels kann dann die Hin- und Herbewegung des Reinigungswerkzeugs herbeiführen. Hierbei kann die Öffnung für das Zugmittel auch nicht im Bereich des Rohrs, sondern im Bereich des Refiners und/oder des Trockners angeordnet sein. Vorzugsweise sind die Öffnungen in Längsrichtung des Rohrs mit einem Abstand von mehr als 10 cm, mehr als 30 cm, mehr als 50 cm oder mehr als 100 cm von dem Längsabschnitt des Rohrs angeordnet, in welchem die Aufbringstation für das Aufbringen des Zusatzes auf die Partikel angeordnet ist. Möglich ist, dass eine Kontaminierung des Zugmittels mit den Partikeln und/oder dem Zusatz durch eine Reinigungseinrichtung vermieden wird. Bei dieser Reinigungseinrichtung kann es sich bspw. um Bürsten oder Abstreifer handeln, entlang welcher das Zugmittel bewegt wird. Die Reinigungseinrichtung kann dabei innerhalb des Rohrs, außerhalb des Rohrs und/oder im Eintritts- und/oder Austrittsbereich des Zugmittels in das Rohr oder aus dem Rohr angeordnet sein.

Für einen besonderen Vorschlag der Erfindung ist der Antrieb magnetisch mit dem Reinigungswerkzeug gekoppelt. In diesem Fall kann der Antrieb radial außenliegend von dem Rohr entlang des Rohrs bewegt werden. Die magnetische Kraft überträgt dann die Bewegung des Antriebs auf die Bewegung des Reinigungswerkzeugs. Dies kann sowohl für eine Bewegung des Antriebs und des Reinigungswerkzeugs in Längsrichtung des Rohrs als auch für eine Bewegung in Umfangsrichtung des Rohrs gelten.

Möglich ist, dass der außenliegend von dem Rohr angeordnete Antrieb gegenüber einem beliebigen Anlagenteil der Produktionsanlage geführt ist. Eine besonders einfache, aber dennoch exakte Führung ergibt sich, wenn der Antrieb an der äußeren Mantelfläche des Rohrs geführt ist. Um lediglich ein die Erfindung nicht beschränkendes Beispiel zu nennen, kann der Antrieb mit Rollen oder mittels eines Gleitkontakts an der Mantelfläche des Rohrs geführt sein, was sowohl für eine Führung in Längsrichtung des Rohrs als auch für eine Führung in Umfangsrichtung des Rohrs gelten kann.

Ein weiterer Aspekt der Erfindung widmet sich der Ausgestaltung der Innenfläche des Rohrs. Vorgeschlagen wird, dass das Reinigungswerkzeug poliert ist. Die polierte Ausgestaltung der Innenfläche des Rohrs führt zu einer Reduzierung von Ablagerungen an der Innenfläche des Rohrs und/oder verbessert die Relativbewegung des Reinigungswerkzeugs entlang der Innenfläche des Rohrs. Alternativ oder kumulativ möglich ist, dass die Innenfläche des Rohrs mit einer verringerten Rauigkeit ausgestattet ist. Alternativ oder kumulativ möglich ist, dass die Innenfläche des Rohrs mit einer Beschichtung versehen ist. Eine derartige Beschichtung kann beispielsweise einem Schutz gegenüber einem Verschleiß der Innenfläche des Rohrs dienen. Andererseits kann mittels der Beschichtung ein Haften des Reinigungswerkzeugs an der Innenfläche des Rohrs vermieden werden oder eine Reibung zwischen dem Reinigungswerkzeug und der Innenfläche des Rohrs kann reduziert werden. In diesem Fall kann es sich um eine Antihaft-Beschichtung handeln.

Möglich ist, dass das Rohr auch einen gekrümmten oder gebogenen Bereich aufweisen kann. Findet beispielsweise ein hülsenförmiges Reinigungswerkzeug Einsatz, kann eine Abstimmung des Spiels des Außendurchmessers der Hülse gegenüber der Innenfläche des Rohrs und der Längserstreckung der Hülse derart erfolgen, dass die Hülse entlang der Rohrbiegung bewegt werden kann, ohne in der Rohrbiegung zu verklemmen. Dies führt zu einer Limitierung der möglichen Längserstreckung des hülsenförmigen Reinigungswerkzeugs und/oder einem erforderlichen Mindestausmaß des Spiels zwischen dem Reinigungswerkzeug und dem Rohr. Die Erfindung schlägt für ein Ausgestaltungsbeispiel vor, dass das Reinigungswerkzeug entsprechend der Rohrbiegung verformt werden kann, wenn sich dieses entlang der Rohrbiegung bewegt. So kann beispielsweise ein hülsenförmiges Reinigungswerkzeug elastisch ausgebildet sein, womit sich das hülsenförmige Reinigungswerkzeug an die Rohrbiegung elastisch anpassen kann. Möglich ist auch, dass das Reinigungswerkzeug aus mehreren Reinigungsteilwerkzeugen besteht, die dann über elastische und/oder Abwinklungen ermöglichende Koppelelemente miteinander gekoppelt sind. Beispielsweise können die Reinigungsteilwerkzeuge jeweils als Teilhülsen mit einer Teil-Längserstreckung ausgebildet sein, die dann über Koppelelemente miteinander gekoppelt sind, so dass sich ein (Gesamt-)Reinigungswerkzeug ergibt, dessen Längserstreckung der Summe der Teil-Längserstreckungen (zuzüglich etwaiger Erstreckungen der Koppelelemente) entspricht.

Für einen weiteren Vorschlag der Erfindung wird das Rohr mittels einer Kühleinrichtung gekühlt, wobei die Kühleinrichtung vorzugsweise radial außenliegend von dem Rohr angeordnet ist und dieses umgeben kann. Die Kühleinrichtung kann dabei stromaufwärts des Reinigungsabschnitts des Reinigungswerkzeugs, im Reinigungsabschnitt des Reinigungswerkzeugs und/oder stromabwärts des Reinigungsabschnitts des Reinigungswerkzeugs angeordnet sein. Möglich ist, dass die Art und das Ausmaß der Anhaftung an der Innenfläche des Rohrs von der Temperatur des Rohrs abhängig ist. Bekannt sind Produktionsanlagen, in welchen sich im Betrieb eine Temperatur des Rohrs von ca. 140 °C ergibt. Mittels der Kühleinrichtung kann die Temperatur des Rohrs insbesondere auf eine Temperatur von 60 °C bis 95 °C, vorzugsweise 70 °C bis 90 °C oder 70 °C bis 80 °C gekühlt werden. Als Kühlmedium kann beispielsweise zirkulierendes Wasser, eine beliebige andere Kühlflüssigkeit oder auch eine Luftkühlung eingesetzt werden. Mittels der Kühleinrichtung kann die Bildung von Ablagerungen verringert werden und/oder eine Aushärtung des Zusatzes infolge einer hohen Temperatur des Rohrs kann verzögert werden. Dies soll anhand der folgenden, die Erfindung nicht beschränkenden Beispiele erläutert werden:
- Findet als Zusatz Urea-Formaldehyd-Leim Einsatz, härtet dieser bei Temperaturen > 90°C aus. Die Partikel, insbesondere Holzfasern, können nach dem Verlassen des Refiners eine Temperatur von ca. 76°C aufweisen. Kommt es zum Kontakt mit der heißen Innenfläche des Rohrs, kann der Härteprozess des Zusatzes beginnen, so dass es zu der Bildung von Anhaftungen aus dem Zusatz, ggf. mit Partikeln, kommt. In diesem Fall müsste das Reinigungswerkzeug mehr Material abschieben als bei einer Kühlung des Rohrs durch die Kühleinrichtung derart, dass die Temperatur, bei der das Aushärten beginnt, nicht erreicht wird.
- Handelt es sich bei dem Zusatz um Proteinleim, der immer Hitze und Druck zur Aushärtung benötigt, verdunstet bei einer zu hohen Temperatur des Rohrs das Wasser und ein klebriger stark haftender Brei bleibt an der Innenfläche des Rohrs kleben.
- Entsprechende Phänomene sind zu beobachten, wenn der Zusatz ein MDI-Bindemittel ist.
- Grundsätzlich gilt, dass der Abbindeprozess des Zusatzes umso schneller erfolgt, je heißer die Innenfläche des Rohrs ist. Dieser Tendenz wirkt die Kühleinrichtung entgegen.

Eine weitere Lösung der der Erfindung zugrundeliegenden Aufgabe stellt eine Reinigungseinrichtung dar, mittels welcher eine Reinigung eines Rohrs erfolgen kann, in dem kontinuierlich ein Zusatz auf einen durch das Rohr geförderten Strom von Partikeln aufgebracht wird und/oder durch welches ein Strom von Partikeln mit darauf aufgebrachtem Zusatz gefördert wird. Vorzugsweise wird mittels der Reinigungseinrichtung ein Verfahren durchgeführt, wie dies zuvor erläutert worden ist. Erfindungsgemäß weist die Reinigungseinrichtung einen Antrieb und ein Reinigungswerkzeug auf. Das Reinigungswerkzeug kann dabei in dem Rohr angeordnet werden, während der Antrieb außerhalb des Rohrs angeordnet ist. Somit kann das Rohr zwischen dem Antrieb und dem Reinigungswerkzeug angeordnet werden. Der Antrieb verfügt über einen Bewegungsantrieb, mittels dessen der Antrieb in Längsrichtung des Rohrs und/oder in Umfangsrichtung des Rohrs bewegbar ist. Die Reinigungseinrichtung verfügt dann über eine magnetische Kopplungseinrichtung, welche den Antrieb und das Reinigungswerkzeug magnetisch miteinander koppelt. Die magnetische Kopplungseinrichtung erzeugt somit eine magnetische Kopplungskraft, welche durch das Rohr hindurch die Bewegung des Antriebs auf das Reinigungswerkzeug überträgt. Mittels der erfindungsgemäßen Reinigungseinrichtung ist eine Reinigung des Rohrs einer Produktionsanlage möglich, ohne dass der Betrieb der Produktionsanlage reduziert oder eingestellt werden muss. Die Reinigungseinrichtung kann auch als Nachrüstprodukt für Rohre bestehender Produktionsanlagen verwendet werden, die bisher nur bei einer Außerbetriebnahme des Rohrs gereinigt werden konnten.

Eine weitere Lösung der der Erfindung zugrundeliegenden Aufgabe stellt eine Produktionsanlage dar, die zum kontinuierlichen Aufbringen eines Zusatzes auf einen durch ein Rohr geförderten Strom von Partikeln und/oder zum Fördern eines Stroms von Partikeln mit darauf aufgebrachtem Zusatz durch das Rohr dient, insbesondere zur Herstellung von Dämmplatten, Holzfaserplatten oder Glasfaserplatten. Erfindungsgemäß verfügt die Produktionsanlage über ein Rohr und eine Aufbringstation, im Bereich welcher ein Zusatz auf den durch das Rohr geförderten Strom von Partikeln aufbringbar ist. Des Weiteren verfügt die Produktionsanlage über (mindestens) eine Reinigungseinrichtung, wie diese zuvor erläutert worden ist. In diesem Fall ist das Reinigungswerkzeug der Reinigungseinrichtung innerhalb des Rohrs angeordnet, während der Antrieb der Reinigungseinrichtung außerhalb des Rohrs angeordnet ist.

Für weitere Ausführungsformen kann die Produktionsanlage geeignet entsprechend den obigen Ausführungsformen und insbesondere mit den Bauelementen zur Gewährleistung der Durchführung des oben erläuterten Verfahrens ausgebildet sein:
- Möglich ist, dass eine Steuereinrichtung vorhanden ist, die den Antrieb der Reinigungseinrichtung, die Aufbringstation und/oder eine Fördereinrichtung zur Erzeugung des Stroms durch das Rohr derart angesteuert, dass während des kontinuierlichen Aufbringens des Zusatzes auf den durch ein Rohr geförderten Strom von Partikeln und/oder während des Förderns des Stroms von Partikeln mit darauf aufgebrachtem Zusatz durch das Rohr das Reinigungswerkzeug entlang der Innenfläche des Rohrs bewegt wird, womit an der Innenfläche des Rohrs abgelagerte Partikel und/oder Zusatz von der Innenfläche entfernt und dem durch das Rohr geförderten Strom zugeführt werden. Hierzu kann die Steuereinrichtung geeignete Steuerlogik aufweisen. Diese Steuereinrichtung kann als eine zentrale Steuereinrichtung ausgebildet sein oder mehrere Steuerteileinrichtungen aufweisen, die miteinander kommunizieren.
- Die Produktionsanlage kann ein als Schaber ausgebildetes Reinigungswerkzeug aufweisen, wobei dann auch möglich ist, dass der Schaber eine Schneide aufweist, im Bereich welcher an der Innenfläche des Rohrs gebildete Ablagerungen entfernt werden.
- In der Produktionsanlage kann das Reinigungswerkzeug einen hülsenförmigen Teilabschnitt oder eine Hülse aufweisen.
- In der Produktionsanlage kann der Antrieb einen Bewegungsantrieb aufweisen, der den Antrieb oszillierend in Längsrichtung des Rohrs bewegt und/oder in Umfangsrichtung des Rohrs bewegt, wobei hierbei auch möglich ist, dass der Antrieb eine Führungseinrichtung aufweist, welche den Antrieb an der Mantelfläche des Rohrs führt, was insbesondere durch Rollen erfolgen kann.
- Möglich ist, dass in der Produktionsanlage die Innenfläche des Rohrs poliert ist, mit einer verringerten Rauigkeit ausgestattet ist oder mit einer Beschichtung versehen ist.
- Möglich ist, dass in der Produktionsanlage das Reinigungswerkzeug verformbar oder elastisch ausgebildet ist, so dass dieses entsprechend einer Rohrbiegung verformt werden kann.
- Möglich ist, dass die Produktionsanlage eine Kühleinrichtung aufweist, im Bereich welcher das Rohr gekühlt wird.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen Abschnitt einer Produktionsanlage mit einem Rohr, einer Aufbringstation, einer Reinigungseinrichtung und einer Kühleinrichtung.
- **Fig. 2**: zeigt einen Querschnitt eines Rohrs mit Reinigungseinrichtung.
- **Fig. 3 und 4**: zeigen Teil-Halblängsschnitte eines Rohrs mit darin angeordneten Reinigungswerkzeugen.
- **Fig. 5**: zeigt einen Längsschnitt durch ein Reduzierstück eines Rohrs mit darin angeordnetem Reinigungswerkzeug.
- **Fig. 6**: zeigt den Innenraum des Reduzierstücks gemäß Fig. 5 mit darin angeordnetem Reinigungswerkzeug bei Blickrichtung in Richtung der Längsachse des Reduzierstücks.
- **Fig. 7**: zeigt eine mögliche Ausgestaltung eines Reinigungswerkzeugs in einem Teilquerschnitt eines Rohrs oder eines Reduzierstücks des Rohrs.
- **Fig. 8**: zeigt schematisch in einer räumlichen Darstellung ein Rohr mit einem Reduzierstück und darin angeordnetem Reinigungswerkzeug.
- **Fig. 9**: zeigt schematisch in einer räumlichen Darstellung ein Rohr mit einem Reduzierstück, einem Reinigungswerkzeug und einem Antrieb, wobei hier auch abgedeckte Teile und Linien dargestellt sind.

### FIGURENBESCHREIBUNG

In der Figurenbeschreibung werden teilweise für Bauelemente, die sich hinsichtlich der Gestaltung und/oder Funktion entsprechen oder ähneln, mit derselben Bezugsnummer gekennzeichnet, wobei diese durch den zusätzlichen Buchstaben a, b, ... unterschieden sein können. Auf diese Bauelemente kann dann mit oder ohne den ergänzenden Buchstaben Bezug genommen sein, womit dann eines der Bauelemente, mehrere der Bauelemente oder sämtliche dieser Bauelemente gemeint sein können.

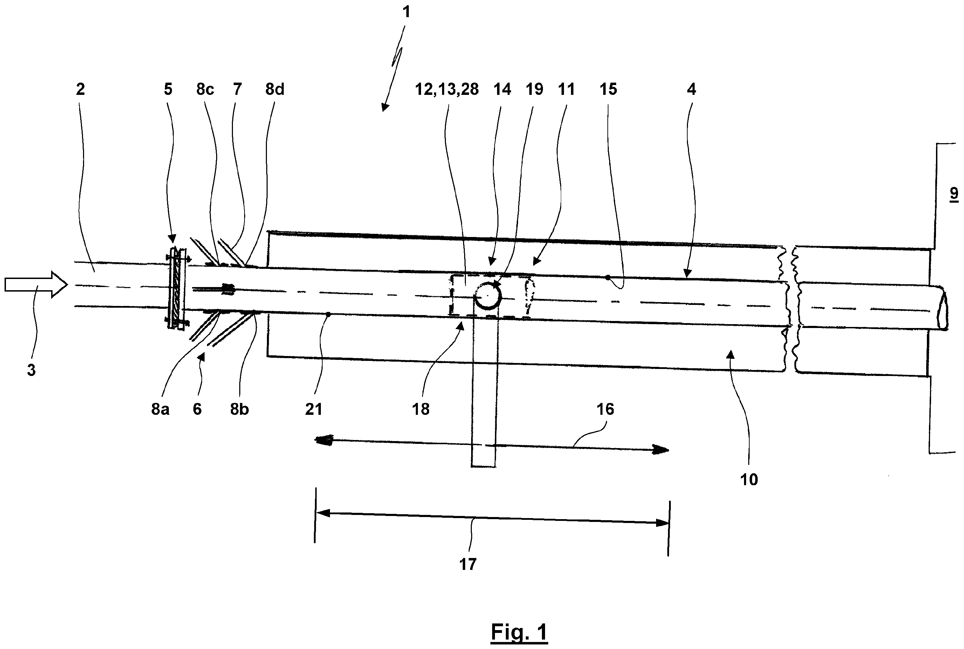

**Fig. 1** zeigt schematisch eine Produktionsanlage 1. Um lediglich einige nicht beschränkende Beispiele zu nennen, kann die Produktionsanlage 1 der Herstellung von Werkstoffplatten, Halbzeugen oder Baumaterialien aus über einen Zusatz (insbesondere eine Flüssigkeit wie ein Bindemittel, eine adhäsive Flüssigkeit oder ein Leim) miteinander verbundenen Partikeln (insbesondere Fasern wie Holzfasern, Steinwolle, Glaswolle, Drahtwolle, Holzspäne oder zellulosehaltige Partikel) dienen.

In der Produktionsanlage 1 werden Partikel 2 mit einem Volumenstrom 3 durch ein Rohr 4 gefördert. Hierbei können die Partikel 2 von einem in Fig. 1 nicht dargestellten Refiner bereitgestellt werden. Das Rohr 4 kann über mehrere Rohrabschnitte verfügen, die gleiche oder unterschiedliche Durchmesser aufweisen können und ein Reduzierstück beinhalten können. Das Rohr 4 kann dabei geradlinig verlaufen oder beliebig kurvenförmig verlaufen. Für das in Fig. 1 dargestellte schematische Ausführungsbeispiel sind Rohrabschnitte des Rohrs 4 mittels eines Flanschs 5 miteinander verbunden.

Die Partikel 2 werden durch eine Aufbringstation 6 gefördert. Im Bereich der Aufbringstation 6 wird ein Zusatz 7 in das Rohr 4 eingebracht, wodurch der Zusatz 7 auf die Partikel 2 aufgebracht werden soll, was in der Form einer Benetzung erfolgen kann. Vorzugsweise handelt es sich bei den Partikeln 2 um Fasern, während es sich bei dem Zusatz 7 um eine Flüssigkeit, insbesondere ein Bindemittel oder ein Leim, handeln kann.

Für das dargestellte Ausführungsbeispiel verfügt die Aufbringstation 6 über Düsen 8, über die der Zusatz 7 in das Rohr 4 eingebracht wird. Für das dargestellte Ausführungsbeispiel sind mehrere Düsen 8a, 8b, 8c, 8d in Umfangsrichtung um das Rohr 4 verteilt sowie in mehreren in Richtung der Längsachse des Rohrs 4 beabstandeten Reihen angeordnet.

An dem in Fig. 1 stromabwärts angeordneten Ende ist das Rohr 4 mit einem Trockner 9 verbunden, so dass ein Strom der mit dem Zusatz 7 benetzten Partikel 2 durch das Rohr 4 in den Trockner 7 möglich ist.

Für das in Fig. 1 dargestellte Ausführungsbeispiel wird das Rohr 4 mittels einer Kühleinrichtung 10 gekühlt. Möglich ist, dass sich, wie in Fig. 1 dargestellt ist, das Rohr 4 durch einen Innenraum der Kühleinrichtung 10 hindurch erstreckt. Die Kühleinrichtung 10 kann entsprechend den aus dem Stand der Technik bekannten Kühleinrichtungen, beispielsweise als Wärmetauscher mit einem durch die Kühleinrichtung 10 hindurchgeleiteten Kühlfluid, ausgebildet sein. Für das dargestellte Ausführungsbeispiel erstreckt sich die Kühleinrichtung 10 von einem Axialabschnitt des Rohrs 4, der stromabwärts der Aufbringstation 6 beginnt, bis zu dem Trockner 9.

In Fig. 1 ist schematisch eine Reinigungseinrichtung 11 dargestellt. Die Reinigungseinrichtung 11 verfügt über ein Reinigungswerkzeug 12, welches für das dargestellte Ausführungsbeispiel als Hülse 13 ausgebildet ist. Die Hülse 13 ist mit einem Spiel oder einer Übergangspassung im Inneren des Rohrs 4 angeordnet. Über einen Antrieb 14 wird das Reinigungswerkzeug 12 entlang einer Innenfläche 15 des Rohrs 4 bewegt. Für das dargestellte Ausführungsbeispiel erfolgt eine oszillierende Reinigungsbewegung 16 in einem Reinigungsabschnitt 17. Der Antrieb 14 ist hier in einem Innen- oder Ringraum zwischen der Mantelfläche des Rohrs 4 und einer Innenfläche der Kühleinrichtung 10 angeordnet und verfügt einerseits über einen Bewegungsantrieb 18, mittels dessen die Reinigungsbewegung 16 des Antriebs 14 herbeigeführt werden kann, sowie eine Kopplungseinrichtung 19, über welchen eine magnetische Kopplung des Antriebs 14 mit dem Reinigungswerkzeug 12 erfolgt, über die eine Übertragung der Reinigungsbewegung 16 von dem Antrieb 14 auf das Reinigungswerkzeug 12 erfolgt.

Die Kopplungseinrichtung 19 kann einen Elektromagneten 24 und/oder einen Permanentmagneten 23 aufweisen. So ist beispielsweise möglich, dass der Antrieb 14 und das Reinigungswerkzeug 12 jeweils einen Permanentmagneten 23 aufweisen, die dann die magnetische Kopplung hervorrufen. Möglich ist aber auch, dass der Antrieb 14 eine Spule zur Bildung eines Elektromagneten 24 aufweist, wobei dann das Magnetfeld des Elektromagneten 24 in Wechselwirkung tritt mit einem ferromagnetischen Reinigungswerkzeug 12 oder einem Permanentmagneten 23 des Reinigungswerkzeugs 12.

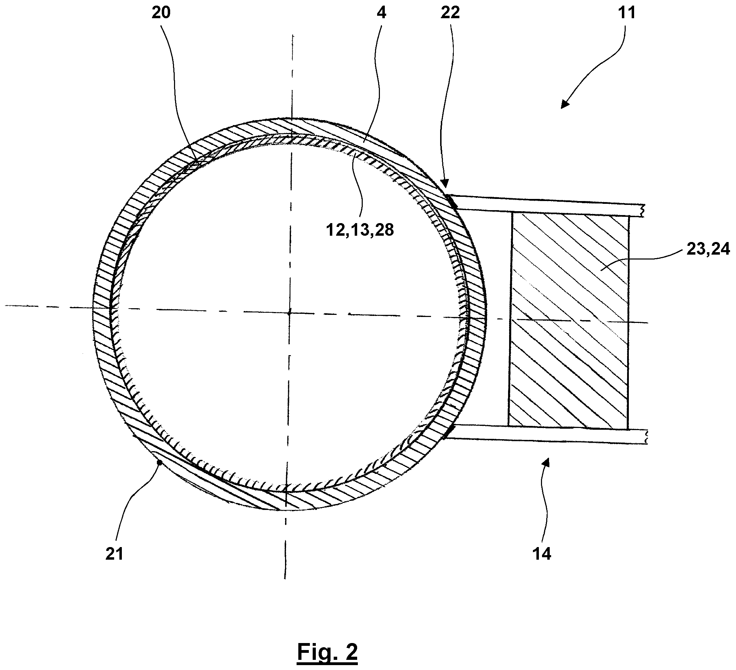

**Fig. 2** zeigt einen Querschnitt durch ein Rohr 4 mit einer Reinigungseinrichtung 11 (ohne dass hier eine Kühleinrichtung 10 dargestellt ist, die optional vorhanden sein kann). Zu erkennen ist, dass zwischen dem als Hülse 13 ausgebildeten Reinigungswerkzeug 12 und dem Rohr 4 ein Spiel 20 oder eine Spielpassung oder Übergangspassung ausgebildet ist, welches eine Relativbewegung zwischen dem Reinigungswerkzeug 12 und dem Rohr 4 in Richtung der Längsachse des Rohrs ermöglicht. An einer Mantelfläche 21 des Rohrs 4 ist über eine Führungseinrichtung 22, beispielsweise einen Gleitkontakt oder Führungsrollen, der Antrieb 14 geführt. Auf nicht dargestellte Weise wird eine Relativbewegung des Antriebs 14 gegenüber dem Rohr 4 in Richtung der Längsachse des Rohrs 4 und damit vertikal zur Zeichenebene gemäß Fig. 2 erzeugt. Die Kopplungseinrichtung 19 verfügt in diesem Fall über einen Permanentmagneten 23 oder einen Elektromagneten 24, welcher die Kopplungskraft erzeugt, die die Reinigungsbewegung 16 des Antriebs 14 auf das Reinigungswerkzeug 12 überträgt.

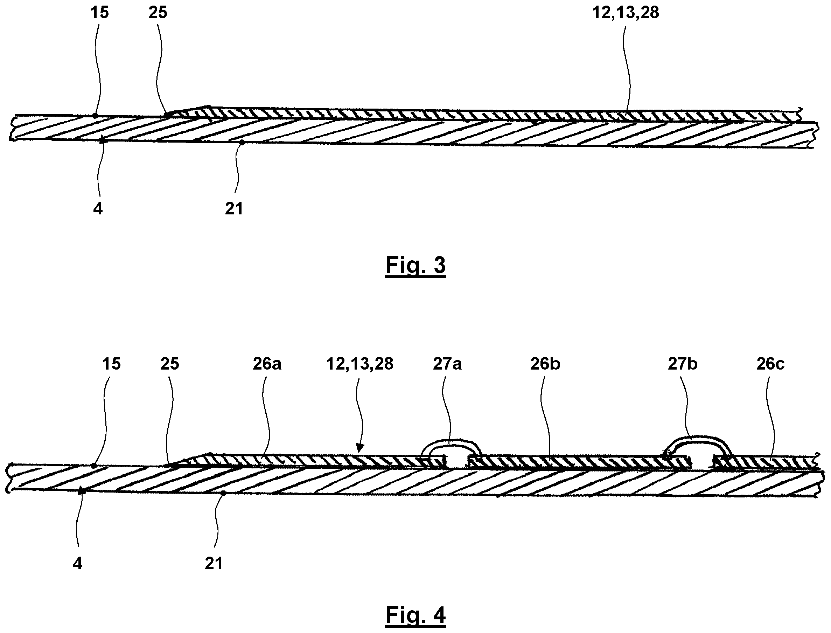

**Fig. 3** zeigt einen Längs-Teilabschnitt durch die Wandung des Rohrs 4 mit daran anliegender oder das Spiel 20 ausbildender Hülse 13. In mindestens einem axialen Endbereich bildet die Hülse eine Schneide 25 aus. Hierzu kann die Hülse 13 in einem spitzen Winkel abgedreht sein. Die Schneide 25 verringert den Kraftaufwand und damit die Antriebsleistung, der bzw. die erforderlich ist, um etwaige Ablagerungen an der Innenfläche 15 des Rohrs 4 zu entfernen.

**Fig. 4** zeigt in einer Fig. 3 entsprechenden Darstellung eine andere Ausgestaltung eines Reinigungswerkzeugs 12, bei der die Hülse 13 mehrere Teilhülsen 26a, 26b, 26c, ... aufweist, die über (bspw. elastische) eine Verformung ermöglichende Koppelelemente 27a, 27b, ... miteinander gekoppelt sind. Eine derartige Ausgestaltung des Reinigungswerkzeugs 12 ist vorteilhaft dann, wenn im Bereich des Reinigungsabschnitts 17 eine Rohrbiegung vorhanden ist, da die Koppelelemente 27 eine Verformung für eine Anpassung des Reinigungswerkzeugs 12 an die Rohrbiegung ermöglichen.

Für die Ausführungsbeispiele in den Fig. 1 bis 4 bildet das Reinigungswerkzeug 12 einen Schaber 28, der als Hülse 13 ausgebildet ist, entlang seiner gesamten Umfangsfläche an der Innenfläche 15 eine Reinigungswirkung herbeiführt und dessen Reinigungsbewegung 16 in Richtung der Längsachse des Rohrs 4 erfolgt.

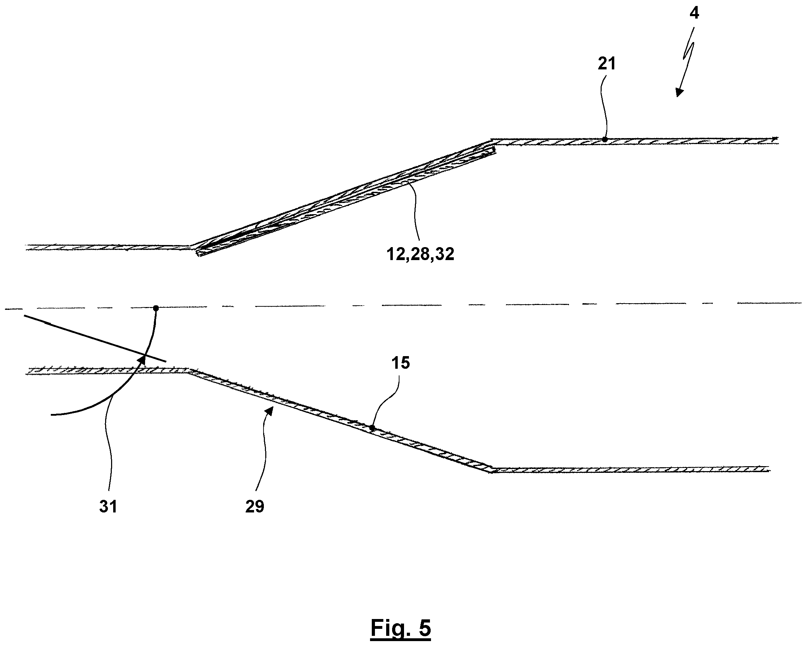

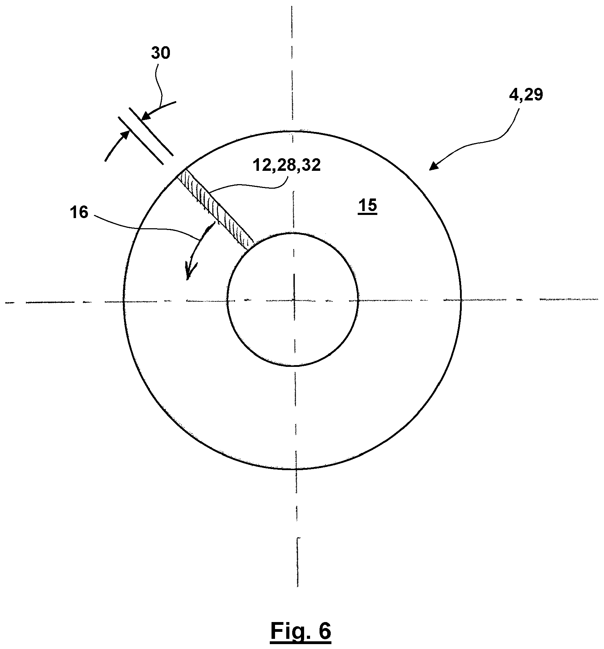

**Fig. 5** zeigt eine Ausgestaltung der Reinigungseinrichtung 11 für eine Reinigung einer Innenfläche 15 des Rohrs 4 im Bereich eines Reduzierstücks 29. In diesem Fall ist das Reinigungswerkzeug 12 nicht als Hülse 13 ausgebildet, sondern das Reinigungswerkzeug 12 ist ein Schaber 28, der sich in Längsrichtung des Rohrs 4 und lediglich über einen Teilumfangsbereich 30 der Innenfläche 15 des Rohrs 4 erstreckt (vgl. **Fig. 6**). Der Schaber 28 folgt in diesem Fall einem Konuswinkel 31 des Reduzierstücks 29, so dass eine Schneide 25 des Schabers 28 entsprechend dem Konuswinkel 31 in einer radialen Längsebene mit dem Konuswinkel 11 geneigt ist.

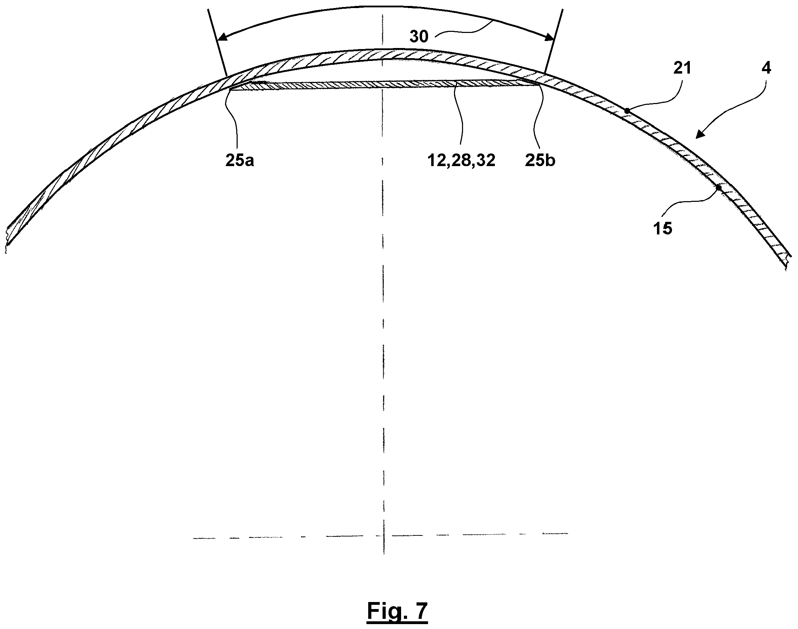

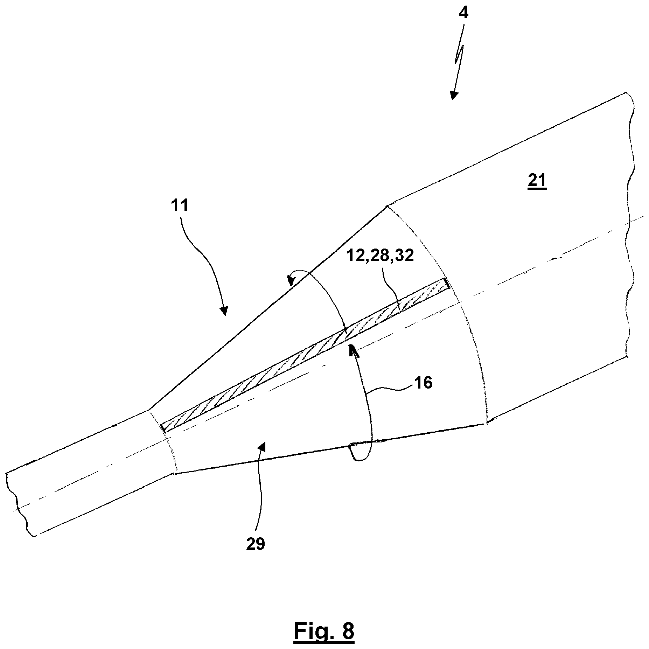

Möglich ist, dass der einer Reinigungsbewegung in Umfangsrichtung um die Längsachse des Rohrs 4 ausgesetzte Schaber 28 kontinuierlich umläuft oder auch oszillierend in Umfangsrichtung bewegt wird. Der Schaber 28 kann in diesem Fall als in einer radialen Halblängsebene orientierte Platte ausgebildet sein, deren radial außenliegende Endfläche die Schneide bildet oder die Reinigungswirkung herbeiführt. Wie in dem Querschnitt in **Fig. 7** sowie in **Fig. 8** ersichtlich ist, ist aber auch möglich, dass der Schaber 28 als Platte 32 ausgebildet ist, deren Längsachse mit dem Konuswinkel 31 gegenüber der Längsachse des Reduzierstücks 19 geneigt ist und deren Querachse eine Sekante des Rohrs 4 bildet, die vertikal zur radialen Richtung orientiert ist. In diesem Fall bilden die außenliegenden seitlichen Ränder der Platte 32 die Schneiden 25a, 25b.

Für den Fachmann ist ersichtlich, dass auch im Bereich des Rohrs 4 mit konstantem Querschnitt der Innenfläche 15 ein plattenförmiger Schaber 28 Einsatz finden kann, der in Umfangsrichtung bewegt wird.

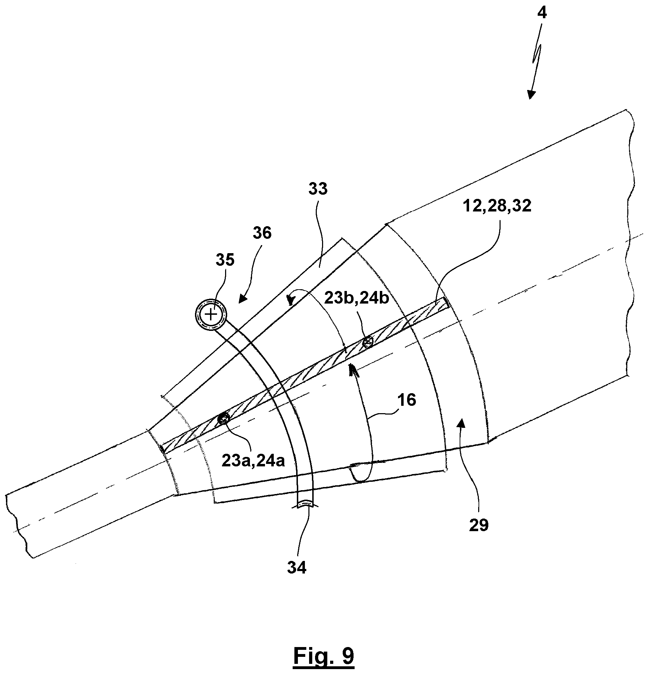

Während für die zuvor dargestellten Ausführungsbeispiele die Reinigungseinrichtung 11 ohne den Antrieb 14 dargestellt worden ist, zeigt **Fig. 9** stark schematisiert auch den Antrieb 14, wobei hier an sich verdeckte und unsichtbare Kanten dargestellt sind. Für dieses Ausführungsbeispiel weist der Antrieb 14 eine das Rohr 4 mit einem Spiel oder einer Übergangspassung umschließende Hülse 33. Ist die Mantelfläche des Rohrs 4 im Bereich des Antriebs 14 zylindrisch, ist die Hülse 33 hohlzylindrisch ausgebildet. Befindet sich hingegen der Antrieb 14 (wie in Fig. 9 dargestellt) im Bereich des Reduzierstücks 29, ist die Innenfläche der Hülse 33 entsprechend der konischen Mantelfläche des Reduzierstücks 29 ausgebildet. Die Hülse 33 und/oder das Reinigungswerkzeug 12 verfügen in diesem Fall über Permanentmagnete 23 und/oder Elektromagnete 24, die die Kopplungseinrichtung 19 zur Kopplung der Bewegung des Antriebs 14 und des Reinigungswerkzeugs 12 bilden. Die Mantelfläche der Hülse 33 verfügt über eine Schneckenverzahnung 34, in welche eine entsprechende Schneckenverzahnung einer Schneckenwelle 35 eingreift. Die Schneckenwelle 35 wird von einem elektrischen Motor in eine kontinuierliche oder oszillierende Antriebsbewegung versetzt, was mittels des gebildeten Schneckentriebs zur Reinigungsbewegung 16 der Hülse 33 um die Längsachse des Rohrs 4 führt. Die Schneckenverzahnung 34 und die Schneckenwelle 35 sind Bestandteil eines Bewegungsantriebs 36. Der Bewegungsantrieb 36 dient der Herbeiführung der Reinigungsbewegung 16, wobei der Bewegungsantrieb 36 auch auf beliebige andere Weise ausgebildet sein kann.

Folgende Kondensationsharze können bspw. als Zusatz 7 verwendet werden:
- Urea-Formaldehyd-Harz (UF)
- Melamin-Urea-Formaldehyd-Harz (MUF)
- Phenol-Melamin-Urea-Formaldehyd-Harz (PMUF)
- Methylendi(phenylisocyanat)e (MDI) und
- Protein-Hydroxyaldehyd-Harz (PHH, GreenBond).

Alternativ oder zusätzlich können als Zusatz 7 Additive über die Arbeitsstation zugeführt werden, bspw.
- Emulsionen,
- Farbstoffe,
- Formaldehydfänger,
- Flammschutzmittel,
- Härter,
- Insektenschutzmittel und/oder
- Pilzschutzmittel.

Je nach Größe der Produktionsanlage 1 kann das Rohr 4 einen Innen-Durchmesser von 48 mm bis zu 500 mm aufweisen, während eine Länge des Rohrs 4 bis zu 100 m betragen kann.

Bei einer Produktionsanlage 1 für eine Herstellung von MDF-Platten mit einer Leistung von ca. 500.000 m³ MDF/Jahr hat das Rohr 4 bspw. einen Innen-Durchmesser von 135 mm und eine Länge von ca. 15 m, wobei auch Abweichungen von diesen Dimensionen von +/- 50% oder +/-30% oder +/-20% oder +/-10% möglich sind. Hierbei kann die Länge des Rohrs 4 von den örtlichen Begebenheiten abhängen. Es werden bei diesem Durchsatz an Fasern ca. 200 kg Bindemittel/Minute durch eine Anzahl von Düsen 8 in das Rohr 4 eingebracht. Mittels Spezialdüsen, insbesondere Venturi-Düsen, kann der als Harz ausgebildete Zusatz 7 unter Hochdruck stark zerstäubt werden. Mit einem atomisierenden Sprühstrahl ist es möglich, den Zusatz 7 bis auf eine ungefähre Größe von 100 bis 40 Mikron aufzuspalten. Möglich ist, dass in einer Aufbringstation 6 der Zusatz 7 über zwei bis vier Düsen 8 in das Rohr eingebracht wird, wobei aber auch mehr Düsen 8 bis hin zu 40 Düsen 8 installiert sein können.

Die Strömung in der Blasleitung ist turbulent, wobei typische Reynolds-Zahlen zwischen 700.000 und 3.000.000 (7 x 10 bis 3 x 10) liegen können.

Die Geschwindigkeit des Stroms der Partikel kann zwischen 50 m/s bis max. 474 m/s, was bspw. bei einem Druckgefälle von 8 bar +/- 50% oder +/-30% oder +/-20% oder +/-10% der Fall sein kann.

An den Düsen 8, die eine optimale Verteilung des Zusatzes 7 vornehmen sollen, kann der Zusatz 7 mit einem Druck im Bereich von 6 bar bis 50 bar anstehen. In dem Rohr 4 ist der Platz für die Entwicklung des aus den Düsen 8 austretenden Strahl oder Kegel des Zusatzes 7 begrenzt. Es hat sich gezeigt, dass der Strahl oder Kegel mit zunehmender Geschwindigkeit in dem Rohr 4 und den hohen Zerstäubungsdrücken die gegenüberliegende Rohrwandung erreichen kann, wo die erläuterten Ablagerungen gebildet werden können.

Bei Produktionsanlagen zur Herstellung von Dämmplatten werden die Fasern mittels MDI (Isocyanaten) gebunden. Hier beträgt der Innendurchmesser des Rohrs 4 bis zu 500 mm Durchmesser, wobei sich dieser auf ca. 200 mm reduzieren kann. Die Anhaftungen der mit MDI benetzten Fasern sind erheblich und nach ca. 2 Tagen bei 24 Stunden Betrieb baut sich eine ca. 50 mm dicke Schicht an der Innenfläche 15 des Rohrs 4 auf. Das Rohr 4 befindet sich vorzugsweise nicht direkt hinter dem Refiner, da der Strom der Partikel 2 abgekühlt sein muss, um nicht vorzeitig eine MDI Reaktion hervorzurufen. Die Fasern durchqueren erst einen Trockner und kühlen in dem Rohr 4 auf ca. 40 °C ab, um danach beleimt zu werden. Der Reinigungsabschnitt 17 kann eine Länge aufweisen, die 8 m +/- 50% oder +/-30% oder +/-20% oder +/-10% betragen kann und kann auch eine Durchmesserveränderung von 500 mm auf 200 mm aufweisen. Die Geschwindigkeit in dem Rohr 4 bei der Beleimung beträgt bspw. 1000 m/s bis 1800 m/s. Dadurch bauen sich sehr viele Anhaftungen an der Innenfläche 15 des Rohrs 4 auf.

Wird das Reinigungswerkzeug 12 oszillierend in Längsrichtung des Rohrs 4 bewegt, kann die Reinigungsbewegung 16 bspw. mit einer maximalen Geschwindigkeit im Bereich von 0,5-10 m/min, bevorzugt 0,5-5 m/min oder 0,3-1 m/min, erfolgen.

Für einen geraden Abschnitt des Rohrs 4 kann ein Reinigungswerkzeug 12 eingesetzt werden, das eine passgenaue Hülse 13, insbesondere einem Rohrabschnitt, ist, die formschlüssig an die Innenfläche des zu säubernden Rohrs 4 anschließt. Die Hülse 13 lässt sich vorzugsweise leicht, ohne jeglichen Druck im Rohr 4 verschieben. Die Wanddicke der Hülse 13 beträgt bspw. 3 - 6 mm, wobei die Wanddicke abhängig von dem Radius des zu reinigenden Rohrs 4 gewählt sein kann.

Die Innenfläche des Reinigungswerkzeugs 12 oder der Hülse 13, durch die beim Reinigen die mit dem Zusatz 7 benetzten Partikel 2 strömen, kann mit einer galvanisch aufgetragenen Verschleißschutzschicht belegt sein oder mit einer Antihaft-Beschichtung aus Kunststoff ausgestattet sein. Als galvanisch aufgetragene Verschleißschutzschicht kann z. B. Chrom verwendet werden und/oder als Antihaft-Beschichtung kann Kunststoff (z. B. Polytetrafluorethylen) verwendet werden. Hartmetallische nanoHVOF^{®}-Beschichtungen wie z. B. WC Co Cr 86 10 4 können ebenfalls verwendet werden. Die Innenfläche des Reinigungswerkzeugs 12 oder der Hülse 13 muss vor dem Aufbringen der Antihaft-Beschichtung poliert werden und darf keine starken Vertiefungen aufweisen.

Bei Reduzierstücken 29 in dem Rohr 4 wird als Reinigungswerkzeug 12 kein Rohr oder keine Hülse 13 verwendet, sondern ein formschlüssig gearbeitetes Metallstück, welches über die Länge des Reduzierstücks 29 als Schaber 28 bewegt wird. Es können dabei auch mehrere Reinigungswerkzeuge 12 zum Einsatz kommen.

In dem zu reinigenden Rohr 4 können bspw. Ablagerungen durch Kondensation der Harze entstehen, die aus Fasern und Stäuben bestehen. Die Adhäsions- oder Anhangskraft kann der physikalische Zustand einer Grenzflächenschicht, die sich zwischen zwei in Kontakt tretenden kondensierten Phasen, d. h. Feststoffen und Flüssigkeiten mit vernachlässigbarem Dampfdruck, ausbildet, sein.

Die Adhäsionskräfte der Bindemittel an der Innenfläche 15 können sind so stark, dass selbst mit Überschall vorbeiströmende, abrasive Partikel 2 oder Fasern die Ablagerungen nicht mitreißen. Um möglichst die Adhäsionskraft so gering wie möglich zu halten und mit dem Reinigungswerkzeug 12 einen guten Reinigungseffekt zu erzielen, kann die Innenfläche 15 des Rohrs 4 speziell ausgelegt und/oder bearbeitet sein:
Die Innenfläche 15 des zu reinigenden Rohrs 4 kann vor einem Aufbringen einer Antihaft-Beschichtung poliert werden und etwaige Vertiefungen oder Rauigkeiten können reduziert oder beseitigt sein. Die Innenfläche 15 des zu reinigenden Rohrs 4 kann mit einer galvanisch aufgetragenen Verschleißschutzschicht oder mit einer Antihaft-Beschichtung aus Kunststoff belegt sein. Als galvanisch aufgetragene Verschleißschutzschicht kommt z. B. Chrom in Betracht, während als Antihaft-Beschichtungen Kunststoff (z. B. Polytetrafluorethylen) oder hartmetallische nanoHVOF^{®}-Beschichtungen wie z. B. WC Co Cr 86 10 4 verwendet werden können.

Die Ablagerungen, die sich bilden, können einem "Lotus-Effekt" unterliegen. Die Ursache der Selbstreinigung liegt u. U. in einer hydrophoben Doppelstruktur der Innenfläche des Rohrs 4 und/oder der Hülse 13. Dadurch wird die Kontaktfläche und damit die Adhäsionskraft zwischen Innenfläche und den auf ihr liegenden Partikel 7 und des Zusatzes 2 so stark verringert, dass es zur Selbstreinigung kommt, wenn das Reinigungswerkzeug nur eine geringe Kraft auf die Anhaftungen ausübt. Die gelösten Anhaftungen werden durch die vorbeiströmenden Partikel mitgerissen und beeinflussen das Gesamtbild des zu produzierenden Endprodukts nicht.

Da die Anhaftungen verstärkt durch die Temperatur des zu reinigenden Rohrs 4 beeinflusst werden, ist es ratsam, das auf ca. 140 °C aufgeheizte Rohr auf 60 °C bis 95 °C, bevorzugt 70 °C bis 90 °C, besonders bevorzugt auf 70 °C bis 80 °C zu kühlen, um den Kondensationsprozess des Zusatzes, insbesondere des Harzes, nicht zu beschleunigen. Als Kühlmedium kann z. B. zirkulierendes Wasser, Kühlflüssigkeit oder Luftspülung eingesetzt werden. Hier kann der Fachmann unter verschiedenen Lösungen wählen.

Da die Wärmeübertragung vom Refiner auf das Rohr 4 hoch ist, wird eine Hochtemperatur-Flanschdichtung am Anschluss eines Flansches 5 zwischen dem Rohr 4 und dem Refiner eingesetzt. Es sollte eine möglichst geringe Wärmeübertragung über den Flansch und das Rohr erfolgen, so dass die eingesetzten Materialien eine geringe thermische Leitfähigkeit haben sollten.

Die Kühleinrichtung 10 kann am Ende der letzten Düse 8 der Aufbringstation 6 beginnen, da diese für Wartungsarbeiten gut zugänglich sein müssen. Die Länge der Kühlstrecke und auch die des Reinigungsabschnittes 17 ist von der Länge des Rohrs 4 abhängig.

Die Reinigungsbewegung 16 des Reinigungswerkzeugs 12 kann durch ein angelegtes Magnetfeld, elektrisch oder permanent, erreicht werden. Mittels eines Werkzeugschlittens kann eine Spule oder ein permanent wirkender Magnet gefördert und das Reinigungswerkzeug 12 im Rohr 4 bewegt werden. Nach Beendigung der Vorwärtsbewegung entlang des gesamten Reinigungsabschnitts 17 kann der Motor des Werkzeugschlittens umgepolt werden, und das Reinigungswerkzeug 12 läuft den gesamten Reinigungsabschnitt zurück mit der gleichen Geschwindigkeit und reinigt das Rohr 4 im Rücklauf. Dieser Prozess wird ohne Unterbrechung durchgeführt, solange die Produktion läuft. Der Vorschub des Werkzeugschlittens kann als Beispiel bei geraden Rohren 4 mittels einer Support-Welle oder Bandzylindern geführt werden. Liegt eine Rohrkrümmung vor, kann z. B. der Werkzeugschlitten induktiv angesteuert werden. Hier kann der Fachmann unter verschiedenen Antriebsformen des technischen Standards wählen.

Die Kühleinrichtung 10, die das zu reinigende Rohr 4 umschließt, kann Aussparungen längs des Rohrs4 aufweisen, um das Magnetfeld möglichst nahe an das Rohr 4 und damit an das Reinigungswerkzeug 12 zu bringen. Bei metallischen Rohren 4 wird u. U. der Magnet oder die die Spule nicht direkt auf das zu reinigende Rohr 4 gesetzt. Möglich ist, dass der Magnet oder die Spule mittels Rollreibung bewegt wird und/oder in Kunststoff (z. B. Polyamid) eingebettet ist, um den Haftwiderstand des angelegten Magnetfelds auf das Rohr 4 zu minimieren.

Bei Reduzierstücken 29 in dem Rohr 4 kann ein entsprechendes Reinigungsprinzip angewendet werden. Das Reinigungswerkzeug 12 kann dann keine Hülse 13, insbesondere kein Rohr, sein, sondern ein formschlüssig gearbeitetes Metallstück, welches über die Länge des Reduzierstücks 29 als Schaber 28 bewegt wird. Es können dabei auch mehrere Werkzeuge zum Einsatz kommen. Der Antrieb erfolgt hier radial, um das Reduzierstück laufend.

### BEZUGSZEICHENLISTE

- 1: Produktionsanlage
- 2: Partikel
- 3: Volumenstrom
- 4: Rohr
- 5: Flansch
- 6: Aufbringstation
- 7: Zusatz
- 8: Düse
- 9: Trockner
- 10: Kühleinrichtung
- 11: Reinigungseinrichtung
- 12: Reinigungswerkzeug
- 13: Hülse
- 14: Antrieb
- 15: Innenfläche
- 16: Reinigungsbewegung
- 17: Reinigungsabschnitt
- 18: Bewegungsantrieb
- 19: Kopplungseinrichtung
- 20: Spiel
- 21: Mantelfläche
- 22: Führungseinrichtung
- 23: Permanentmagnet
- 24: Elektromagnet
- 25: Schneide
- 26: Teilhülse
- 27: Koppelelement
- 28: Schaber
- 29: Reduzierstück
- 30: Teilumfangsbereich
- 31: Konuswinkel
- 32: Platte
- 33: Hülse
- 34: Schneckenverzahnung
- 35: Schneckenwelle
- 36: Bewegungsantrieb

## Patentansprüche

1. Verfahren zum kontinuierlichen Aufbringen eines Zusatzes (7), insbesondere eines Bindemittels, auf einen durch ein Rohr (4) geförderten Strom von Partikeln (2) und/oder zum Fördern eines Stroms von Partikeln (2) mit darauf aufgebrachtem Zusatz (7) durch das Rohr (4), **dadurch gekennzeichnet, dass**
- während des kontinuierlichen Aufbringens des Zusatzes (7) auf den durch ein Rohr (4) geförderten Strom von Partikeln (2) und/oder
- während des Förderns eines Stroms von Partikeln (2) mit darauf aufgebrachtem Zusatz (7) durch das Rohr (4)
ein Reinigungswerkzeug (12) entlang einer Innenfläche (15) des Rohrs (4) bewegt wird, womit an der Innenfläche (15) des Rohrs (4) abgelagerte Partikel (2) und/oder an der Innenfläche des Rohrs abgelagerter Zusatz (7) von der Innenfläche (15) entfernt und in den durch das Rohr (4) geförderten Strom zurückgeführt werden/wird.

2. Verfahren nach Anspruch 1, **dadurch gekennzeichnet, dass** das Reinigungswerkzeug (12) ein Schaber (28) ist, der insbesondere eine Schneide (25) aufweist, mit dem oder der an der Innenfläche (15) des Rohrs (4) abgelagerte Partikel (2) und/oder Zusatz (7) von der Innenfläche (15) entfernt werden/wird.

3. Verfahren nach einem der vorhergehenden Ansprüche, **dadurch gekennzeichnet, dass** das Reinigungswerkzeug (12) einen hülsenförmigen Teilabschnitt oder eine Hülse (13) aufweist.

4. Verfahren nach einem der vorhergehenden Ansprüche, **dadurch gekennzeichnet, dass** das Reinigungswerkzeug (12) oszillierend in Längsrichtung des Rohrs (4) bewegt wird.

5. Verfahren nach einem der vorhergehenden Ansprüche, **dadurch gekennzeichnet, dass** das Reinigungswerkzeug (12) in Umfangsrichtung des Rohrs (4) bewegt wird.

6. Verfahren nach Anspruch 5, **dadurch gekennzeichnet, dass** das Reinigungswerkzeug (12) im Bereich eines Reduzierstücks (29) des Rohrs (4) in Umfangsrichtung des Rohrs (4) bewegt wird.

7. Verfahren nach einem der vorhergehenden Ansprüche, **dadurch gekennzeichnet, dass** das Reinigungswerkzeug (12) von einem außerhalb des Rohrs (4) angeordneten Antrieb (14) bewegt wird.

8. Verfahren nach Anspruch 7, **dadurch gekennzeichnet, dass** der Antrieb (14) eine magnetische Antriebskraft auf das Reinigungswerkzeug (12) aufbringt, welche das Reinigungswerkzeug (12) bewegt.

9. Verfahren nach Anspruch 7 oder 8, **dadurch gekennzeichnet, dass** der Antrieb (14) an einer Mantelfläche (21) des Rohrs (4) geführt wird.

10. Verfahren nach einem der vorhergehenden Ansprüche, **dadurch gekennzeichnet, dass** das Reinigungswerkzeug (12) entlang einer Innenfläche (15) des Rohrs (4) bewegt wird, die
- poliert ist und/oder
- mit einer verringerten Rauigkeit ausgestattet ist und/oder
- mit einer Beschichtung versehen ist.

11. Verfahren nach einem der vorhergehenden Ansprüche, **dadurch gekennzeichnet, dass** das Reinigungswerkzeug (12) entlang einer Rohrbiegung bewegt wird, wobei das Reinigungswerkzeug (12) entsprechend der Rohrbiegung verformt wird.

12. Verfahren nach einem der vorhergehenden Ansprüche, **dadurch gekennzeichnet, dass** das Rohr (4) mittels einer Kühleinrichtung (10) gekühlt wird.

13. Reinigungseinrichtung (11) für die Reinigung eines Rohrs (4), in welchem kontinuierlich ein Zusatz (7) auf einen durch das Rohr (4) geförderten Strom von Partikeln (2) aufgebracht wird und/oder durch welches ein Strom von Partikeln (2) mit darauf aufgebrachtem Zusatz (7) gefördert wird, insbesondere unter Durchführung eines Verfahrens nach einem der vorhergehenden Ansprüche, **dadurch gekennzeichnet, dass**
a) die Reinigungseinrichtung (11) einen Antrieb (14) und ein Reinigungswerkzeug (12) aufweist, zwischen denen das Rohr (4) angeordnet werden kann,
b) der Antrieb (14) einen Bewegungsantrieb (36) aufweist, mittels dessen der Antrieb (14) in Längsrichtung des Rohrs (4) bewegbar ist und/oder in Umfangsrichtung des Rohrs (4) bewegbar ist, und
c) eine magnetische Kopplungseinrichtung (19) vorhanden ist, welche den Antrieb (14) und das Reinigungswerkzeug (12) magnetisch miteinander koppelt.

14. Produktionsanlage (1) zum kontinuierlichen Aufbringen eines Zusatzes (7) auf einen durch ein Rohr (4) geförderten Strom von Partikeln (2) und/oder zum Fördern eines Stroms von Partikeln (2) mit darauf aufgebrachtem Zusatz (7) durch das Rohr (4) mit
a) einem Rohr (4),
b) einer Aufbringstation (6), im Bereich welcher ein Zusatz (7) auf einen durch ein Rohr (4) geförderten Strom von Partikeln (2) aufbringbar ist und
c) einer Reinigungseinrichtung (11) nach Anspruch 13,
wobei das Reinigungswerkzeug (12) der Reinigungseinrichtung (11) innerhalb des Rohres (4) angeordnet ist und der Antrieb (14) der Reinigungseinrichtung (11) außerhalb des Rohres (4) angeordnet ist.

15. Produktionsanlage (1) nach Anspruch 14, **dadurch gekennzeichnet, dass**
a) eine Steuereinrichtung vorhanden ist, welche den Antrieb (14) der Reinigungseinrichtung (11), die Aufbringstation (6) und/oder eine Fördereinrichtung zur Erzeugung des Stroms durch das Rohr (4) derart ansteuert, dass während des kontinuierlichen Aufbringens des Zusatzes (7) auf den durch ein Rohr (4) geförderten Strom von Partikeln (2) und/oder während des Förderns des Stroms von Partikeln (2) mit darauf aufgebrachtem Zusatz (7) durch das Rohr (4) das Reinigungswerkzeug (12) entlang der Innenfläche (15) des Rohrs (4) bewegt wird, womit an der Innenfläche (15) des Rohrs (4) abgelagerte Partikel (2) und/oder Zusatz (7) von der Innenfläche (15) entfernt und dem durch das Rohr (4) geförderten Strom zuführt werden, und/oder
b) das Reinigungswerkzeug (12) ein Schaber (28) ist, der insbesondere eine Schneide (25) aufweist, im Bereich dessen oder welcher an der Innenfläche (15) des Rohrs (4) abgelagerte Partikel (2) und/oder Zusatz (7) von der Innenfläche (15) entfernt werden, und/oder
c) das Reinigungswerkzeug (12) einen hülsenförmigen Teilabschnitt aufweist, und/oder
d) der Antrieb (14) einen Bewegungsantrieb (36) aufweist, der den Antrieb (14) oszillierend in Längsrichtung des Rohrs (4) bewegt und/oder in Umfangsrichtung des Rohrs (4) bewegt, und/oder
e) der Antrieb (14) eine Führungseinrichtung (22) aufweist, welche den Antrieb (14) an der Mantelfläche (21) des Rohrs (4) führt, und/oder
f) die Innenfläche (15) des Rohrs (4) poliert ist, mit einer verringerten Rauigkeit ausgestattet ist und/oder mit einer Beschichtung versehen ist, und/oder
g) das Reinigungswerkzeug (12) elastisch ausgebildet ist, und/oder
h) eine Kühleinrichtung (10) vorhanden ist, im Bereich welcher das Rohr (4) gekühlt wird.
